(19) Europäisches Patentamt
European Patent Office
Office européen des brevets

(11) Publication number: **0 673 975 A2**

# (12) EUROPEAN PATENT APPLICATION

(21) Application number: **95201491.8**

(22) Date of filing: **07.11.89**

(51) Int. Cl.[6]: **C08L 71/12**, C08L 81/02, C08L 77/00

This application was filed on 06 - 06 - 1995 as a divisional application to the application mentioned under INID code 60.

(30) Priority: **08.11.88 JP 280340/88**
**23.02.89 JP 41649/89**
**27.02.89 JP 43200/89**
**28.02.89 JP 45489/89**
**10.05.89 JP 115173/89**
**24.05.89 JP 128943/89**
**24.07.89 JP 188883/89**
**31.07.89 JP 198726/89**
**10.08.89 JP 205620/89**

(43) Date of publication of application:
**27.09.95 Bulletin 95/39**

(60) Publication number of the earlier application in accordance with Art.76 EPC: **0 368 413**

(84) Designated Contracting States:
**BE DE ES FR GB IT NL**

(71) Applicant: **GE PLASTICS JAPAN LTD.**
**Itohpia Nihonbashi-Honcho Building**
**2-7-1 Nihonbashi-Honcho**
**Chuo-ku**
**Tokyo 103 (JP)**

(72) Inventor: **Inoue, Kazunari**
**516-3 Kamimita-cho**
**Utsunomiya City,**
**Tochigi Prefecture (JP)**
Inventor: **Saito, Akihiro**
**3413-84 Ishiimachi**
**Utsunomiya City,**
**Tochigi Prefecture (JP)**
Inventor: **Morioka, Masataka**
**13-7 Daimachi**
**Moka City Tochigi Prefecture (JP)**

(74) Representative: **Smulders, Theodorus A.H.J., Ir. et al**
**Vereenigde Octrooibureaux**
**Nieuwe Parklaan 97**
**NL-2587 BN 's-Gravenhage (NL)**

## (54) Polyphenylene sulfide resin composition.

(57) A resin composition comprising polyphenylene sulfide, polyphenylene ether and polyamide is modified with the addition of 0.01 to 10 parts by weight of a compound having a functional group, whereby impact resistance of a molded article produced from the resin composition is improved.

EP 0 673 975 A2

## Field of the Invention

The present invention relates a polyphenylene sulfide resin composition, particularly such a resin composition having improved brittleness to impact and good appearance and heat resistance.

## Background of the Invention

Polyphenylene sulfide has good resistance to heat, flame and chemicals and high regidity, and is a very useful resin as an engineering plastic. However, it also has a drawback that it is weak to impact. Accordingly, there were proposed resin compositions in which excellent properties of polyphenylene sulfide are utilized or its drawbacks are improved.

For instance, Japanese Patent Application Laid-Open No. 156561/75 discloses a resin composition comprising polyphenylene ether and polyphenylene sulfide in which polyphenylene sulfide is added to improve moldability and fire-resistant of polyphenylene ether.

Japanese Patent Application Laid-Open No. 69255/78 discloses a polyphenylene sulfide resin composition containing polyphenylene sulfide and polyamide. This intends to improve brittleness of polyphenylene sulfide.

Further, Japanese Patent Application Laid-Open No. 213758/84 proposes a resin composition in which a polyamide resin and an epoxy resin are admixed to a blend of polyphenylene sulfide and polyphenylene ether in order to improve compatibility between polyphenylene sulfide and polyphenylene ether.

If polyphenylene ether and polyamide are blended to polyphenylene sulfide to improve brittleness of polyphenylene sulfide, the resin composition obtained by simple mixing is brittle and has poor appearance, because polyphenylene sulfide and polyphenylene ether are less compatible with each other. When polyamide is admixed to polyphenylene sulfide, compatibility between polyphenylene sulfide and polyamide is insufficient, so that improvement of brittleness of polyphenylene sulfide is insufficient and a new problem, delamination, is furthermore caused. In the case where compatibility between polyphenylene sulfide and polyphenylene ether is improved by addition of polyamide and an epoxy resin, chemical reaction of the epoxy resin with the polyamide and the polyphenylene sulfide takes place, which results in a problem of unstable melt flow properties.

## The Brief Description of the Invention

The purpose of the present invention is to provide a polyphenylene sulfide resin composition in which polyphenylene sulfide is sufficiently compatibilized with polyphenylene ether, whereby the aforesaid problems are solved.

The present inventors have now found that a molded product of a resin composition comprising polyphenylene sulfide and polyphenylene ether is excellently improved in impact resistance by blending particular compounds with the resin composition.

Thus, the present invention is a resin composition comprising a polyphenylene sulfide resin, a polyphenylene ether resin and a polyamide resin, characterized in that the resin composition contains:

(A) from 20 to 80 parts by weight of a polyphenylene sulfide resin,

(B) from 20 to 80 parts by weight of the total of 10 to 90% by weight of a polyphenylene ether resin or a combination of a polyphenylene ether resin and a polystyrene resin, and 10 to 90% by weight of a polyamide resin, and

(C) from 0.01 to 10 parts by weight of at least one compound selected from the group consisting of the following (a), (b), (c) and (d):

(a) compounds having, in a molecule, a group selected from amino, epoxy, mercapto, halogene, isocyanato and ureido groups; and a chemical structure selected from Y-O-C, Y-OH, Y-H, Y-O-P, Y-NH, Y-N-C, Y-N=C, Y-Cl, Y-Br and Y-I, wherein Y is an element selected from the 3A, 4A, 5A, 3B, 4B and 5B groups of the periodlc table,

(b) saturated aliphatic polycarboxylic acids or derivatives thereof,

(c) compounds having, in a molecule, a carboncarbon double or triple bond, and an acid anhydride, carboxylic acid, acid amide, imide, carboxylic ester, amino, hydroxyl or epoxy group,

(d) compounds having, in a molecule, a group represented by the formula

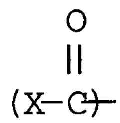

(wherein X is F, Cl, Br, I, OH or OR with R being H, alkyl or aryl group) and an acid anhydride, carboxylic acid, acid amide, imide, carboxylic ester, amino or hydroxyl group, the total of the components (A) and (B) being 100 parts by weight.

## Detailed Description of the Invention

The polyphenylene sulfide resin used in the invention (hereinafter referred to as PPS) contains preferably at least 70 mole % of a structural unit represented by the general formula:

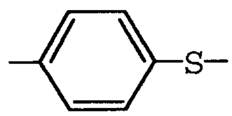

which then gives excellent properties to the composition. Methods of the polymerization for PPS include a method where p-dichlorobenzene is polymerized in the presence of sulfur and sodium carbonate, a method where polymerization is carried out in a polar solvent in the presence of sodium sulfide or sodium hydrosulfide and sodium hydroxide, or hydrogen sulfide and sodium hydroxide, a method where p-chlorothiophenol is self-condensed, and a preferred method where sodium sulfide is reacted with p-dichlorobenzene in an amide type solvent such as N-methyl pyrrolidone and dimethyl acetamide or a sulfone type solvent such as sulfolane. In these, it is preferred to add an alkali metal salt of carboxylic acid or sulfonic acid or alkali metal hydroxide in order to regulate a polymerization degree. As a copolymerized component, a meta bond

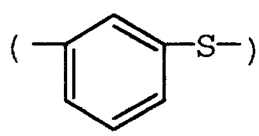

,

ortho bond

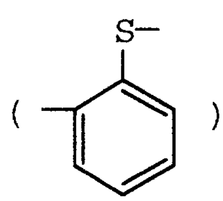

,

ether bond

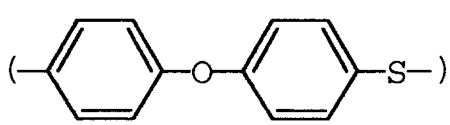

,

sulfone bond

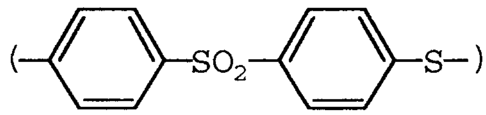
,

biphenyl bond

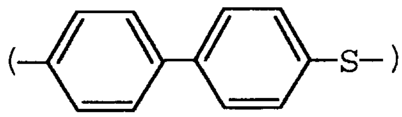
,

substituted phenylsulfide bond

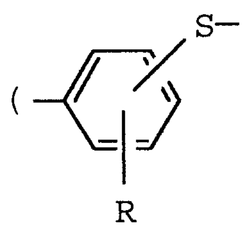
,

wherein R represents alkyl, nitro, phenyl, alkoxy, carboxylic acid or its metal salt group) and trifunctional phenyl sulfide bond

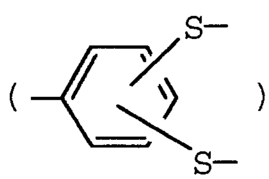

may be incorporated as far as crystallinity of the polymer is not greatly affected. However, the amount of the copolymerized components is preferrably 10 mole % at most. When tri- or more functional phenyl, biphenyl or naphthyl sulfide bond is particularly selected, 3 mole % or less is preferred with 1 mole % or less being more preferred.

Such PPS may be synthesized in a usual preparation process, such as (1) reaction of a hologen substituted aromatic compound with alkali sulfide (U.S. Patent 2,513,188, Japanese Patent Publications 27671/69 and 3368/70), (2) condensation reaction of thiophenols in the presence of alkali catalysts or cupper salts (U.S. Patent 3,274,165, U.S. Patent 1,160,660) and (3) condensation reaction of aromatic compounds in the coexistence of sulfur chloride and a Lewis acid catalyst (Japanese Patent Publication 27255/71, Belgian Patent 29437). These may be selected depending upon purposes.

PPS is now commercially available from several companies. There are various grades having different crosslinking densities and viscosities. PPS having less cross-linked structure is preferred in the present invention.

Polyphenylene ether resin (hereinafter referred to as PPE) is a generic name of polymers represented by the general formula:

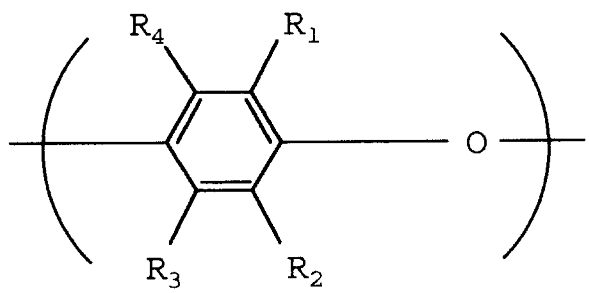

(A)

wherein R1, R2, R3 and R4 are a monovalent substituent selected from a hydrogen atom, a halogen atom, an alkyl group, an alkoxy group, a haloalkyl and haloalkoxy group in which at least 2 carbon atome are present between a halogen atom and a phenyl ring with the exclusion of those having tertiary α-carbon atoms and n is an integer representing a degree of polymerization. The polymer may be a homopolymer or a copolymer of two or more comonomers represented by the above general formula. In preferred examples, R1 and R2 are an alkyl group of 1 to 4 carbon atoms, and R3 and R4 are a hydrogen atom or an alkyl group of 1 to 4 carbon atoms. For instance, there can be named poly(2,6-dimethyl-1,4-phenylene)ether, poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether and poly(2-ethyl-6-propyl-1,4-phenylene)ether. A typical polyphenylene ether copolymer is a copolymer in which a part of the aforesaid polyphenylene ether recurring unit is replaced with tri-alkyl substituted phenol, such as 2,3,6-trimethylphenol. Further, styrene type compounds may be grafted on these polyphenylene ethers to yield copolymers. Examples of the styrene type compound-grafted polyphenylene ethers are copolymers grafted with styrene, α-methylstyrene, vinyltoluene and chlorostyrene.

The polystyrene resin used in the present invention (hereinafter referred to as PS) is known per se and must contain at least 25% by weight, based on the polymer, of recurring units derived from vinyl compounds represented by the general formula:

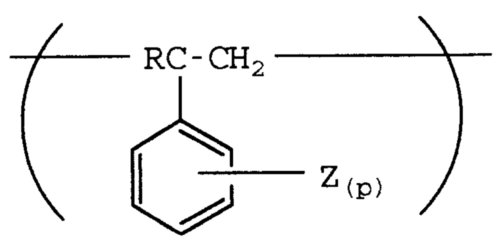

wherein R is a hydrogen atom or a $C_1$ - $C_4$ alkyl group, Z represents a substitutent halogen or $C_1$ - $C_4$ alkyl group, and p is an integer from zero to 5. Such styrene polymers include homopolymer of styrene or derivatives thereof; styrene polymers mixed or modified with natural or synthetic elastomers such as polybutadiene, polyisoprene, butyl rubber, EPDM, ethylene-propylene copolymers, natural rubber and epichlorohydrin; and styrene-containing copolymers such as styrene-acrylonitrile copolymers (SAN), styrene-butadiene copolymers, styrene-maleic anhydride copolymers and styrene-acrylonitrile-butadiene copolymers (ABS). Styrene polymers preferably used in the invention are a styrene homopolymer and rubber-reinforced polystyrene. A ratio of the mixed styrene resin to the polyphenylene ether resin is preferably in a range where excellent properties of the polyphenylene ether resin are not damaged. Accordingly, preferred is a ratio of 20 to 100 parts by weight of PPE to 0 to 80 parts by weight of PS.

As component (a), there may be used coupling agents which are generally used as surface treating agents for various fillers or as primers in adhesion or painting, such as silane type coupling agents, titanate type coupling agents, aluminium type coupling agents, phosphorus type coupling agents, zircoaluminate type coupling agents, etc.

Examples of such coupling agents which meet the requirements for component (a) include: silane type coupling agents such as N-(2-aminoethyl)-3-aminopropyl methyl dimethoxy silane, N-(2-aminoethyl)-3-aminopropyl trimethoxy silane, 3-aminopropyl triethoxy silane, 3-glycidoxy propyl trimethoxy silane, 3-glycidoxy propyl methyl dimethoxy silane, 2-(3,4-epoxy cyclohexyl)ethyl trimethoxy silane, 3-chloropropyl methyl dimethoxy silane, 3-chloropropyl trimethoxy silane, 3-mercaptopropyl trimethoxy silane, 3-chloropropyl methyl dichlorosilane, 3-chloropropyl methyl diethoxy silane, 1,3-bis(chloromethyl)-1,1,3,3-tetramethyl disilazane, 3-ureidopropyl triethoxy silane, 3-isocyanatopropyl triethoxy silane; isopropyl tri(N-aminoethyl aminoethyl)titanate; tetra(triethanolamine) zirconate; and Zircoaluminate A and S (containing an amino group or mercapto group, respectively, trade mark, available from Kusumoto Kasei Co.). Hydrolysates of the aforesaid coupling agents may also be used as component (a).

Component (a) is added in an amount of from 0.01 to 10 parts by weight, preferably from 0.05 to 4 parts by weight, to 100 parts by weight of the total of (A) and (B).

Component (b) used in the composition according to the invention is compounds (1), (2) and/or (3) which will be explained below.

First, component (1) is a saturated aliphatic polycarboxylic acid or derivative thereof. A "saturated allphatic carboxylic acid or derivative thereof" used herein means the compounds described in WO 85/05372 and represented by the formula:

$(R^{I}O)_mR(COOR^{II})_n(CONR^{III}R^{IV})_s$

wherein R is a linear or branched, saturated aliphatic hydrocarbon of from 2 to 20, preferably 2 to 10, carbon atoms; $R^{I}$ is selected from the group consisting of hydrogen, and alkyl, aryl, acyl and carbonyl dioxy groups of 1 to 10, preferably 1 to 6, more preferably 1 to 4, carbon atoms, with hydrogen being most preferable; $R^{II}$ is selected from the group consisting of hydrogen, and alkyl and aryl groups of from 1 to 20 carbon atoms, preferably from 1 to 10 carbon atoms; each of $R^{III}$ and $R^{IV}$ is selected from the group consisting of hydrogen, and alkyl, aryl and acyl groups of from 1 to 10, preferably from 1 to 6, most preferably 1 to 4, carbon atoms; m is equal to 1 and (n + s) is greater than or equal to 2, preferably equal to 2 or 3, and n and s are each greater than or equal to zero and ($R^{I}O$) is in an $\alpha$ or $\beta$ position to a carbonyl group and at least two carbonyl groups are separated by 2 to 6 carbon atoms.

Examples of the derivatives of the saturated aliphatic polycarboxylic acids according to the invention include esters, amides, anhydrides, hydrates and salts of the satuated aliphatic polycarboxylic acids. Examples of the saturated aliphatic polycarboxylic acids are citric acid, malic acid and agaricic acid. Examples of acid esters include acetyl citrate and mono- or di- stearyl citrates and the like. Suitable acid amides include, for example, N,N'-diethyl citric acid amide; N,N'-dipropyl citric acid amide; N-phenyl citric acid amide; N-dodecyl citric acid amide; N,N'-didodecyl citric acid amide and N-dodecyl malic acid amide.

The compounds under the aforesaid (2) are described in Japanese Patent Application Laid-Open No. 49753/81. Examples of such include maleic anhydride, maleic acid, fumaric acid, maleimide, maleic hydrazide, reaction products of maleic anhydride with diamines, such as those having the structures:

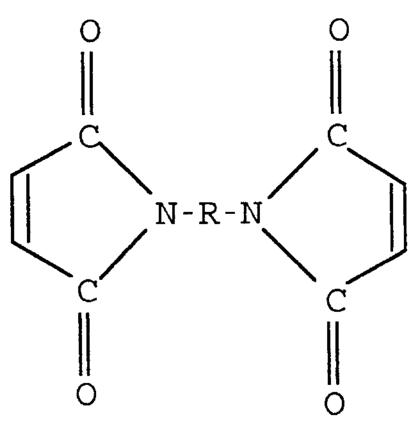

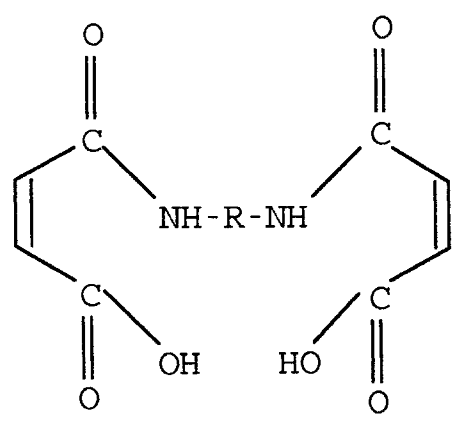

(wherein R represents an aliphatic or aromatic group.), methylnadic anhydride, dichloromaleic anhydride, maleic acid amide, natural oils and fats such as soybean oil, tung oil, cactor oil, linseed oil, hempseed oil, cottonseed oil, sesami oil, rapeseed oil, peanut oil, tsubaki oil, olive oil, coconut oil and sardine oil, epoxidated natural oils and fats such as epoxidated soybean oil, unsaturated carboxylic acid such as acrylic acid, butenoic acid, crotonic acid, vinyl acetic acid, methacrylic acid, pentenoic acid, angelic acid, tiglic acid, 2-pentenoic acid, 3-pentenoic acid, $\alpha$-ethyl acrylic acid, $\beta$-methyl crotonic acid, 4-pentenoic acid, 2-hexenoic acid, 2-methyl-2-pentenoic acid, 3-methyl-2-pentenoic acid, $\alpha$-ethyl crotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadececnoic acid, eicosenoic acid, docosenoic acid, erucic acid, tetracosenoic acid, mycolipenoic acid, 2,4-pentadienoic acid, 2,4-hexadienoic acid, diallylacetic acid, geranic acid, 2,4-decadienoic acid, 2,4-dodecadienoic acid, 9,12-hexadecadienoic acid, 9,12-octadecadienoic acid, hexadecatrienoic acid, linolic acid, linolenic acid, octadecatrienoic acid, eicosadienoic acid, eicosatrienoic acid, eicosatetraenoic acid, recinoleic acid, eleostearic acid, oleic acid, eicosapentaenoic acid, erucic acid, docosadienoic acid, docosatrienoic acid, docosatetraenoic acid, docosapentaenoic acid, tetracosenoic acid, hexacosenoic acid, hexacodienoic acid, octacosenoic acid and tolaacontenoic acid, or esters, acid amides or anhydrides of these unsaturated carboxylic acid, unsaturated alcohols such as allyl alcohol, crotyl alcohol, methyl vinyl carbinol, allyl carbinol, methyl propenyl carbinol, 4-pentene-1-ol, 10-undecene-1-ol, propargyl alcohol, 1,4-pendadiene-3-ol, 1,4-hexadiene-3-ol, 3,5-hexadiene-2-ol, 2,4-hexadiene-1-ol, alcohols represented by the general formulae:

$C_nH_{2n-5}OH$, $C_nH_{2n-7}OH$ or $C_nH_{2n-9}OH$

with n being positive integer, 3-butene-1,2-diol, 2,5-dimethyl-3-hexene-2,5-diol, 1,5-hexadiene-3,4-diol, and 2,6-octadiene-4,5-diol, or unsaturated amines where the OH group in the aforesaid unsaturated alcohols is replaced with an amino group, addition product of maleic anhydride or phenols to low molecular weight polymers (e.g., those with average molecular weight of 500 to 10,000) or high molecular weight polymers (e.g., those with average molecular weight above 10,000) or these polymers in which amino, carboxylic acid, hydroxyl or epoxy group is introduced. Compounds which have 2 or more same or different functional groups selected from the first group and 2 or more same or different functional groups selected from the second group are also included in component (2).

Next, component (3) is a compound which has a group represented by the formula

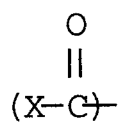

(wherein X is F, Cl, Br, I, OH or OR with R being H, alkyl or ally group), and acid anhydride, carboxylic acid, acid amide, imide, carboxylic acid ester, amino or hydroxyl group. Examples of such compounds are those described in WO 86/02086, for instance, trimellitic acid anhydride chloride, chloroethanoyl succinic acid anhydride, chloroformyl succinic acid anhydride, and 1-acetoxyacetyl-3,4-dibenzoic acid anhydride.

The invention is characterized in that polyamide (hereinafter, PA) is used together with at least one of compounds (a) to (d).

The polyamide used in the invention includes nylon-4, nylon-6, nylon-6,6, nylon-12 and nylon-6,10, but the invention should not be limited to only these. In the present invention, it is preferred to use polyamide in which the amount of a terminal amino group is higher than the amount of a terminal carboxyl group. Such polyamides may be obtained by adding an excessive amount of, for instance, compounds having a group reactive with a carboxylic group, such as diamines, to a polymerization system of the polyamide. Alternatively, such polyamides may be obtained by reacting the polyamide with, for instance, compounds having a group reactive with a carboxylic group after polymerization of the polyamide. Preferably, the mole ratio of the terminal amino group to the terminal carboxyl group is at least 1.01, particularly 1.3, in the invention.

In the invention, PPE and PA are used in a ratio of 10 to 90 wt. % of PPE to 90 to 10 wt. % PA, preferably 20 to 80 wt. %. 80 to 20 wt. %. If PPE is less than 10 wt. %, water absorption caused by PA adversely affects physical properties to lower heat resistance and rigidity. If PA is less than 10 wt. %, surface appearance is worse, and a drawback of PPS, brittleness, is not sufficiently improved.

The components (a) to (d) under (C) are described hereinbefore. The amount of (C) is preferably from 0.05 to 4 parts by weight. Particularly high effects are attained when component (a) is used in combination with at least one of (b) to (d). Alternatively, the terminal of at least a part of PPE is preferably modified with at least one of epoxy, carboxyl and acid anhydride groups, particularly when component (a) is used.

Such terminal group modoficatlon of PPE with an epoxy, carboxyl or acid annydride group can be conducted in any known methods.

Epoxidation of a terminal group is described, for instance, in Japanese Patent Application Laid-Open No. 125525/88. Terminal-epoxidated PPE may be obtained by bringing PPE into contact with a substance having epoxy group(s) under heating. Such a substance having epoxy group(s) is preferably an epoxy

compound which has a halogen group at the other end or has two epoxy groups at both ends. Preferred compounds with one epoxy group at one end include epichlorohydrin and 2-methylepichlorohydrin. Preferred compounds with two epoxy groups at both ends include 2,2-bis(4-glycidylphenylether)propane, and epoxy resins. From the viewpoint of preventing PPE from blocking with each other, compounds with one epoxy group at one end are more preferred.

Modification of the terminal group with a carboxyl or acid anhydride group is described, for instance, in WO 87/07286. PPE with terminal carboxyl or acid anhydride group(s) may be obtained by reacting PPE with acid chloride having carboxyl or acid anhydride group(s), such as trimellitic anhydride chloride.

In the terminal-modified PPE, all of the terminal groups of PPE need not be modified. It is more preferred that PPE subjected to the terminal modification reaction is included in an amount of 70% by weight or less calculated on the total PPE.

When component (b), (c) or (d) is used, it is preferred that PPE and PA are previously melt-kneaded with (b), (c) or (d), whereby PPE and PA are compatibilized.

In the resin composition according to the invention, it is preferred that PPS constitutes a continuous phase, in which PA is dispersed. Further, in the PA dispersion phase, PPE Is dispersed. In most cases, the PA dispersion phase is in a relatively large irregular shape, in which usually plural, sometimes one, small PPE particles are contained. Such morphology was determined by etching a cross section of a molded article with formic acid which dissolves PA or methylene chloride which dissolves PPE, and observe it with a scanning electron microscope.

The aforesaid dispersion state of the polymers can easily be created by melt-kneading PPS, PPE and PA together with at least one compound selected from (b), (c) and (d) above. If the three polymers are simply kneaded without using such a compound, PA and PPE are separately dispersed in PPS with a size of PA of 1 $\mu$ or less and a size of PPE of several $\mu$. To compare the invention in which PPE microparticles are dispersed in PA, the difference in the dispersion state is remarkable.

Compounds (b), (c) and (d) are known to improve impact resistance of PPE/PA polymer alloy. However, it is not expected that these create the aforesaid dispersion state among PPS, PPE an PA according to the invention.

All of the aforesaid compositions according to the invention may optionally contain a rubbery substance in an amount of 80 parts by weight or less, particularly 50 parts by weight or less, per 100 parts by weight of the total of PPS and PPE to further enhance impact resistance. When PA is contained, 20 parts by weight or less of a rubbery substance is preferably used per 100 parts by weight of the total of PPS and PPE.

The rubbery material includes natural or synthetic polymeric materials elastic at room temperature. Examples of such are natural rubber, butadiene polymer, styrene-isoprene copolymer, butadiene-styrene copolymer including random copolymer, block copolymer, graft copolymer and any other structures, isoprene polymer, chlorobutadiene polymer, butadiene-acrylonitrile copolymer, isobutylene polymer, isobutylene-butadiene copolymer, isobutylene-isoprene copolymer, acrylic ester polymer, ethylene-propyrene copolymer, ethylene-propylene-diene copolymer, Thiokol rubber, polysulfide rubber, polyurethane rubber, polyether rubber such as polypropylene oxide, and epichlorohydrin rubber.

These rubbery materials may be prepared by any known methods, such as emulsion polymerization or solution polymerization, using any known catalysts such as peroxides, trialkyl aluminium, lithium halide or nickel catalysts. The rubbery materials may have various degrees of crosslinking and various ratios among micro-structures such as cis, trans and vinyl. They may be particles of various average sizes. Further, the copolymers may be random copolymers, block copolymers or graft copolymers. The rubbery materials may also be copolymers with other monomers such as olefines, dienes, aromatic vinyl compounds, acrylic acid, acrylic esters and methacrylic esters. These comonomers may be copolymerized in any manner of random copolymerization, block copolymerization or graft copolymerization. Examples of these monomers are ethylene, propylene, styrene, chlorostyrene, $\alpha$-methylstyrene, butadiene, isobutyrene, chlorobutadiene, butene, isobutylene, acrylic acid, methyl acrylate, ethyl acrylate, butyl acrylate, methyl methacrylate and acrylonitrile. Partially modified rubbery materials may also be used in the invention, such as polybutadiene having hydroxy- or carboxy- modified terminals, partially hydrogenated styrene butadiene block copolymers, and partially hydrogenated styrene isoprene block copolymers.

Further, as the rubbery material, there may used styrene type elastomer such as copolymers, e.g. random, block or graft copolymers of vinyl aromatic compounds and conjugated dienes. Examples of these are hydrogenated or non-hydrogenated block copolymers represented by the formula A-B-A or A-B (wherein A is polystyrene and B is elastomeric dienes such as polybutadiene), radialtereblock copolymer of styrene with conjugated dienes, acrylic resin-modified styrene butadiene resins; and graft copolymers obtained by graft copolymerizing a monomer or monomer mixture containing styrenes as a major

component to a rubbery polymer.

Further, to the resin composition according to the invention may be added other resins, additives such as pigments, dyes and reinforcing agents (e.g., glass fiber or carbon fiber), fillers such as carbon black, silica and titanium oxide, heat resisting agents, antioxidants, anti-aging agents, lubricants, releasing agents, nucleating agents, plasticizers, flame retardants, flow-improving agents and anti-statics.

It is preferred to use a melt kneading process in preparing the composition of the invention. It is allowed to use a small amount of solvents, but this is not needed usually. As equipment used, extruders, banbury mixers, rollers and kneaders may be named in particular. These may be operated batchwise or continuously. The order of mixing is not particularly restricted. If a rubbery material is added, it is preferred to melt-knead the rubbery material and PPE in advance to thereby disperse the rubbery material in PPE.

The invention will be further explained with reference to the following Examples which are not intended to limit the invention.

In Examples, unless otherwise stated, part and % are part by weight and percentage by weight, respectively.

## Examples 1 to 3

As PPS, poly-p-phenylene sulfide having a melt viscosity of 3,900 poise, measured at a temperature of 300 °C and a shearing speed of 200 $sec^{-1}$, was used.

As PPE, poly(2,6-dimethyl-1,4-phenylene)ether having an intrinsic viscosity of 0.48 dl/g (chloroform, 25 °C) was used.

As polyamide, polyamide-6 having a terminal amino group amount of $8.4 \times 10^{-5}$ mole/g, a terminal carboxyl group amount of $1.8 \times 10^{-5}$ mole/g and a molecular weight of 13,000 was used.

Among compounds (C), citric acid was used.

The components shown in Table 1 were mixed, and then extruded into pellets through a twin screw extruder (screw diameter 50 mm) set at 300 °C. The pellets were dried and injection molded at 320 °C to prepare test pieces to determine physical properties. The results are shown in Table 1. For comparison, resin compositions were prepared without using citric acid. Molded articles from Examples were better in strength, tenacity and appearance, than ones from Comparative Examples.

In the molded articles from the Examples, PA is dispersed in PPS and, further, PPE is dispersed in PA. In the Comparative Examples, PA and PPE were separately dispersed in PPS.

Table 1

| | Example | | | Comp.Ex. | |
|---|---|---|---|---|---|
| | 1 | 2 | 3 | 1 | 2 |
| PPS | 50 | 50 | 50 | 50 | 50 |
| PPE | 20 | 15 | 10 | 20 | 15 |
| P A | 30 | 35 | 40 | 30 | 35 |
| Citric acid | 0.5 | 0.5 | 0.5 | - | - |
| Bending strength ($Kg/cm^2$) | 870 | 860 | 910 | 830 | 850 |
| Bending fructure energy (Kg cm) | 15 | 15 | 17 | 13 | 14 |
| HDT (°C) | 205 | 205 | 206 | 200 | 195 |
| Appearance | Good | Good | Good | Bad | Bad |

## Examples 4 to 6

Each component was used in the amount shown in Table 2

In these cases, PPE and citric acid were first melt kneaded in a twin screw extruder set at 320 °C to prepare pellets, which were then melt kneaded with PPS and polyamide in a twin screw extruder set at 300 °C. The results are shown in Table 2. Examples 5 and 6 showed higher strength and tenacity than the roughly corresponding Examples 1 and 3.

Table 2

| | Ex. 4 | Ex. 5 | Ex. 6 |
|---|---|---|---|
| PPS | 50 | 50 | 50 |
| PPE | 30 | 20 | 10 |
| P A | 20 | 30 | 40 |
| Citric acid | 0.6 | 0.4 | 0.2 |
| Izod without notch (Kg cm/cm) | 24 | 42 | 64 |
| Bending strength ($Kg/cm^2$) | 1080 | 1130 | 1130 |
| Bending fructure energy (Kg cm) | 21 | 27 | 25 |
| HDT (°C) | 198 | 195 | 197 |

Examples 7 to 9

Among compounds (C), maleic anhydride was used.

The components were used in the amounts shown in Table 3 to prepare test pieces as in Example 1. The results are shown in Table 3.

Table 3

| | Example | | | Comp. Ex. | |
|---|---|---|---|---|---|
| | 7 | 8 | 9 | 3 | 4 |
| PPS | 50 | 50 | 50 | 50 | 50 |
| PPE | 20 | 15 | 10 | 20 | 15 |
| P A | 30 | 35 | 40 | 30 | 35 |
| Maleic anhydride | 0.5 | 0.5 | 0.5 | - | - |
| Bending strength ($Kg/cm^2$) | 870 | 860 | 910 | 830 | 850 |
| Bending fructure energy (Kg cm) | 15 | 15 | 17 | 13 | 14 |
| HDT (°C) | 205 | 205 | 206 | 200 | 195 |
| Appearance | Good | Good | Good | Bad | Bad |

Examples 10 to 12

The components shown in Table 4 were used. Similarly in Example 4, PPE and maleic anhydride were first kneaded, and then kneaded with PPS and PA. The results are shown in Table 4.

Table 4

| | Ex. 10 | Ex. 11 | Ex. 12 |
|---|---|---|---|
| PPS | 50 | 50 | 50 |
| PPE | 30 | 20 | 10 |
| P A | 20 | 30 | 40 |
| Maleic anhydride | 0.6 | 0.4 | 0.2 |
| Izod without notch (Kg cm/cm) | 24 | 42 | 64 |
| Bending strength ($Kg/cm^2$) | 1080 | 1130 | 1130 |
| Bending fructure energy (Kg cm) | 21 | 27 | 25 |
| HDT (°C) | 198 | 195 | 197 |

Examples 13 to 24

The used components were as follows: Component (A) PPS:

PPS T 4 (Topren Co.) with a melt viscosity of 3,900 poise at 300 °C and a shearing speed of 200 $sec^{-1}$.

Component (B): PPE

Unmodified PPE, poly(2,6-dimethyl-1,4-phenylene)ether with an intrinsic viscosity of 0.46 dl/g (chloroform, 30 °C)

PPE-1, PPE with acid anhydride group at ends, prepared as follows:

(Preparation)

100 Parts by weight of PPE having an intrinsic viscosity of 0.46 (chloroform, 30 °C) were dissolved in 500 parts by weight of toluene in a dried flask. Then, 3 parts by weight of trimellitic anhydride chloride were added, and heated up to 100 °C under stirring. Six parts by weight of dimethyl-n-butylamine were added and allowed to react for 2 hours. After cooling to about room temperature, methanol of double the volume as the toluene added was added to precepitate the polymer, which was filtered, washed sequentially with methanol, water and methanol, and dried at 150 °C in vacuo for 8 hours to obtain PPE having terminal acid anhydride groups.

PPE-2, PPE with epoxy group at ends, prepared as follows:

(Preparation)

100 Parts by weight of PPE having an intrinsic viscosity of 0.46 were dissolved in 1,500 parts by weight of epichlorohydrin in a dried flask. Then, 15 parts by weight of a 33.3% sodium hydroxide solution were added, heated up to 100 °C under stirring and allowed to react for 4 hours. Then, washing and drying were conducted as in the case of PPE-1 to obtain PPE having terminal epoxy groups.

:PA

PA6-A, polyamide-6 having a terminal amino group amount of 8.4 x $10^{-5}$ mole/g, a terminal carboxy group amount of 1.8 x $10^{-5}$ mole/g, and a molecular weight of 13,000.

PA6-B, polyamide-6 having a terminal amino group amount of 4.6 x $10^{-5}$ mole/g, a terminal carboxy group amount of 7.0 x $10^{-5}$ mole/g, and a molecular weight of 13,000.

Component (C)(a):

3-glycidoxypropyl trietyoxy silane agent 1

3-aminopropy trimethoxy silane agent 2

3-mercaptopropyl trimethoxy silane agent 3

isopropyl tri(N-aminoethyl-aminoetyl) titanate agent 4

methyl trimethoxy silane, which does not have a functional group from the first group of (C)(a), for comparison agent 5

Optional component (rubbery material):

KRATON G 1651 (trade mark, Shell Chemical, partially hydrogenated styrene-butadiene block copolymer, i.e. SEBS)

PPE and PA and, in the case of using SEBS, SEBS were mixed in the amounts indicated in Table 5, and pre-extruded into pellets with a twin screw extruder (screw diameter 50 mm) set at 300 °C.

Then, the above pellets and the other components indicated in Table 5 were mixed in the amounts indicated in Table 5, and the pre-extrusion were repeated as mentioned above to prepare pellets.

After dried, the pellets were molded into test pieces using an injection molding machine set at a cylinder temperature of 320 °C to determine Izod impact strength. The results are shown in Table 5.

The Izod impact strength (1/8 inch with or without notch) was determined in accordance with ASTM D 256.

Table 5

| | | Example 13 | 14 | 15 | 16 | 17 | 18 | 19 | 20 | 21 | 22 | 23 | 24 |
|---|---|---|---|---|---|---|---|---|---|---|---|---|---|
| (A) | PPS | 45 | 45 | 50 | 50 | 50 | 50 | 50 | 50 | 50 | 50 | 50 | 50 |
| (B) | PPE (unmodified) | 30 | 30 | - | - | - | - | - | - | - | - | 15 | 15 |
| | PPE-1 | - | - | 30 | 30 | 30 | 30 | - | 30 | - | 20 | 15 | - |
| | PPE-2 | - | - | - | - | - | - | 30 | - | 30 | - | - | 15 |
| | PA6-A | 25 | - | 20 | 20 | 20 | 20 | 20 | - | - | 20 | 20 | 20 |
| | PA6-B | - | 25 | - | - | - | - | - | 20 | 20 | - | - | - |
| (C) | Agent 1 | 0.3 | 0.3 | 0.3 | - | - | - | 0.3 | 0.3 | 0.3 | 0.3 | 0.3 | 0.3 |
| | Agent 2 | - | - | - | 0.3 | - | - | - | - | - | - | - | - |
| | Agent 3 | - | - | - | - | 0.3 | - | - | - | - | - | - | - |
| | Agent 4 | - | - | - | - | - | 0.3 | - | - | - | - | - | - |
| | Agent 5 | - | - | - | - | - | - | - | - | - | - | - | - |
| Optional component KG 1651 | | - | - | - | - | - | - | - | - | - | 10 | - | - |
| Izod without notch, Kg cm/cm | | 52 | 40 | 68 | 58 | 52 | 53 | 67 | 60 | 59 | NB* | 67 | 66 |
| Izod with notch, Kg cm/cm | | 2.4 | 2.1 | 3.2 | 2.8 | 2.6 | 2.5 | 3.0 | 2.4 | 2.2 | 10.2 | 2.6 | 2.8 |

*NB: The test piece did not break.

Comparative Examples 5 to 14

The substances indicated in Table 6 were used in the amounts indicated in Table 6 to prepare test pieces of the resin compositions as in Examples 32 to 43, and Izod strengthes were determined. The results are shown in Table 6.

These are to be compared with Examples 13 to 24. In this sense, these are called "Comparative Examples" here, which does not, however, mean that these are the prior art.

Table 6

| | Example 5 | 6 | 7 | 8 | 9 | 10 | 11 | 12 | 13 | 14 |
|---|---|---|---|---|---|---|---|---|---|---|
| (A) PPS | 45 | 45 | 50 | 50 | 50 | 50 | 50 | 50 | 50 | 50 |
| (B) PPE (unmodified) | 30 | 30 | - | - | - | - | - | - | 15 | 15 |
| PPE-1 | - | - | 30 | 30 | - | 30 | - | 20 | 15 | - |
| PPE-2 | - | - | - | - | 30 | - | 30 | - | - | 15 |
| PA6-A | 25 | - | 20 | 20 | 20 | - | - | 20 | 20 | 20 |
| PA6-B | - | 25 | - | - | - | 20 | 20 | - | - | - |
| (C) Agent 1 | - | - | - | - | - | - | - | - | - | - |
| Agent 2 | - | - | - | - | - | - | - | - | - | - |
| Agent 3 | - | - | - | - | - | - | - | - | - | - |
| Agent 4 | - | - | - | - | - | - | - | - | - | - |
| Agent 5 | - | - | - | 0.3 | - | - | - | - | - | - |
| Optional component KG 1651 | - | - | - | - | - | - | - | 10 | - | - |
| Izod without notch, Kg cm/cm | 28 | 18 | 38 | 39 | 40 | 26 | 25 | NB* | 37 | 38 |
| Izod with notch, Kg cm | 1.4 | 0.7 | 2.0 | 2.0 | 2.1 | 1.2 | 1.1 | 6.2 | 2.2 | 2.0 |

*NB: The test piece did not break.

Examples 25 to 27 and Comparative Examples 15 to 17

PPE, PA, maleic anhydride or citric acid and, in the case of using SEBS, SEBS were mixed in the amounts indicated in Table 7, and pre-extruded in the same conditions as in Examples 13 to 24. The resultant pellets and the other components were extruded into pellets. Test pieces were prepared and subjected to Izod impact tests as in Examples 13 to 24. The results are shown in Table 7.

Table 7

| | Example | | | Comp. Ex. | | |
|---|---|---|---|---|---|---|
| | 25 | 26 | 27 | 15 | 16 | 17 |
| (A) PPS | 50 | 50 | 50 | 50 | 50 | 50 |
| (B) PPE (unmodified) | 30 | 30 | 20 | 30 | 30 | 20 |
| PA6-A | 20 | 20 | 20 | 20 | 20 | 20 |
| (C) Maleic anhydride | 0.5 | - | - | 0.5 | - | - |
| Citric Acid | - | 0.5 | 0.5 | - | 0.5 | 0.5 |
| Agent 1 | 0.3 | 0.3 | 0.3 | - | - | - |
| Optional component KG 1651 | - | - | 10 | - | - | 10 |
| Izod without notch, Kg cm/cm | 62 | 60 | NB* | 36 | 35 | NB* |
| Izod with notch, Kg cm/cm | 3.0 | 2.9 | 10.0 | 1.9 | 1.9 | 5.8 |

*NB: The test piece did not break.

Examples 28 to 31

The used PPS was poly-p-phenylene sulfide having a melt viscosity of 3,900 poise at 300 °C and a shearing speed of 200 $sec^{-1}$.

The used PPE was poly(2,6-dimethyl-1,4-phenylene)ether having an intrinsic viscosity of 0.46 dl/g (chloroform, 30 °C).

The used polyamide was polyamide-6 having a terminal amino group amount of 8.4 x $10^{-5}$ mole/g, a terminal carboxyl group amount of 1.8 x $10^{-5}$ mole/g, and a molecular weight of 13,000.

Compatibilization between PPE and polyamide were conducted in the following two methods.

(1) PPE, PA and maleic anhydride in the amounts indicated in Table 8 were extruded through an extruder set at 300 °C.

(2) PPE was reacted with trimellitic anhydride chloride to modify PPE at the terminals, which was called PPE-II. PPE-II and PA were melt kneaded.

Then, the PPE/PA thus compatibilized and PPS were extruded into pellets through a twin screw extruder (screw diameter 50 mm) set at 300 °C. The pellets were dried and injection molded into test pieces at 320 °C, which were evaluated for physical properties. The results are shown in Table 8.

Comparative Example 18

PPS, PPE and PA in the amounts indicated in Table 8 were melt kneaded as in Example 28 and evaluated for physical properties in the same way.

Referential Example 1

PPS, PPE, PA and maleic anhydride were melt kneaded at the same time, and evaluated for physical properties in the same way.

Referential Example 2

PPS, PPE-II and PA were melt kneaded at the same time, and evaluated for physical properties.

As seen from Table 8, the resin compositions of the Examples gave better impact strength than that of the Comparative Example. In the publicly unknown Referential Examples 1 and 2 where the same component as in Examples 28 and 30 were used and PPE and PA were, however, not compatibilized in

advance, melt indexes were small, which means poor melt stability, though better impact strength than that of the Comparative Example was attained.

In the molded articles from the Examples, PA was dispersed in PPS, and PPE or PPE-II was dispersed in PA in turn. In the Comparative Example, PA and PPE were separately dispersed in PPS.

Table 8

| | Ex. 28 | Ex. 29 | Ex. 30 | Ex. 31 | Comp. 18 | Ref. 1 | Ref. 2 |
|---|---|---|---|---|---|---|---|
| PPS | 50 | 50 | 50 | 50 | 50 | 50 | 50 |
| PPE | 20 | 10 | - | - | 20 | 20 | - |
| PPE-II | - | - | 20 | 10 | - | - | 20 |
| Maleic anhydride | 0.4 | 0.2 | - | - | - | 0.4 | - |
| P A | 30 | 40 | 30 | 40 | 30 | 30 | 30 |
| Izod impact, Kg cm/cm | 42 | 64 | 40 | 57 | 27 | 35 | 35 |
| Melt index, 315°C 5 Kg load | 28 | 30 | 26 | 28 | 35 | 3 | 6 |

Examples 32 to 34

As an optional rubbery material, SEBS (partially hydrogenated styrene-butadiene-styrene copolymer) was further added. The compositions and results are shown in Table 9.

Table 9

| | Ex. 32 | Ex. 33 | Ex. 34 |
|---|---|---|---|
| PPS | 50 | 50 | 50 |
| PPE | 25 | 20 | 15 |
| Maleic anhydride | 1.4 | 1.4 | 1.4 |
| P A | 20 | 20 | 20 |
| SEBS | 5 | 10 | 15 |
| Izod without notch, Kg cm/cm | NB* | NB* | NB* |
| Izod with notch, Kg cm/cm | 2.5 | 4.2 | 6.2 |

*NB: The test piece did not break.

## Claims

**1.** A resin composition comprising a polyphenylene sulfide resin, a polyphenylene ether resin and a polyamide resin, characterized in that the resin composition contains:

(A) from 20 to 80 parts by weight of a polyphenylene sulfide resin,

(B) from 20 to 80 parts by weight of the total of (B-1) 10 to 90% by weight of a polyphenylene ether resin or a combinat ion of a polyphenylene ether resin and a polystyrene resin, and (B-2) 10 to 90% by weight of a polyamide resin, and

(C) from 0.01 to 10 parts by weight of at least one compound selected from the group consisting of the following (a), (b), (c) and (d):

(a) compounds having, in a molecule, a group selected from amino, epoxy, mercapto, halogene, isocyanato and ureido groups; and a chemical structure selected from Y-O-C, Y-OH, Y-H, Y-O-P, Y-NH, Y-N-C, Y-N=C, Y-Cl, Y-Br and Y-I, wherein Y is an element selected from the 3A, 4A, 5A, 3B, 4B and 5B groups of the periodic table,

(b) saturated aliphatic polycarboxylic acids or derivatives thereof,

(c) compounds having, in a molecule, a carbon-carbon double or triple bond, and an acid anhydride, carboxylic acid, acid amide, imide, carboxylic ester, amino, hydroxyl or epoxy group,

(d) compounds having, in a molecule, a group represented by the formula

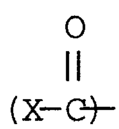 ,

(wherein X is F, Cl, Br, I, OH or OR with R being H, alkyl or aryl group) and an acid anhydride, carboxylic acid, acid amide, imide, carboxylic ester, amino or hydroxyl group, the total of the components (A) and (B) being 100 parts by weight.

**2.** The resin composition according to claim 1, wherein component (C) is selected from the group consisting of silane type coupling agents, titanate type coupling agents, aluminium type coupling agents, phosphorus type coupling agents, zircoaluminate type coupling agents, citric acid, malic acid, agaricic acid, maleic anhydride, maleic acid, fumaric acid, maleimide, maleic acid amide, trimellitic anhydride chloride and trimellitic acid chloride.

**3.** The resin composition according to claim 1 or 2, wherein said (B-1)consists of 20 to 100% by weight of the polyphenylene ether resin and 0 to 80% by weight of the polystyrene resin.

4. The resin composition according to claims 1 to 3, wherein a rubbery material is further contained.

5. The resin composition according to claims 1 to 4, wherein the polyamide has the mole amount of a terminal amino group larger than the mole amount of a terminal carboxyl group.

6. The resin composition according to claims 1 to 5, wherein the polyphenylene ether resin is composed mainly of polyphenylene ether modified to have at least one terminal group selected from carboxyl, acid anhydride and epoxy groups.

7. The resin composition according to claims 1 to 6, wherein the polyphenylene ether and the polyamide are previously compatibilized with component (C).